# DEMANDE DE BREVET EUROPEEN

(11) **EP 1 911 656 A1**
(43) Date de publication de la demande: **16.04.2008**
(21) Numéro de dépôt: 07291234.8
(22) Date de dépôt: 10.10.2007
(51) Int. Cl.: B61L 23/00

(54) **Dispositif et procédé de détection de la présence d'un objet**

(30) Priorité: 13.10.2006 FR 0654256
(71) Demandeur: Alstom Transport S.A., 92300 Levallois-Perret (FR); INSTITUT NATIONAL DE RECHERCHE SUR LES TRANSPORTS ET LEUR SECURITE (INRETS), 94110 Arcueil (FR)
(72) Inventeur: van den Abeele, Didier, 95270 Asnieres sur Oise (FR); Heddebaut, Marc, 59262 Sainghin en Melantois (FR); Boukour, Fouzia, 59300 Aulnoy-lez-Valenciennes (FR); Rioult, Jean, 59000 Lille (FR)
(74) Mandataire: Blot, Philippe Robert Emile

(57) **Abrégé**

Dispositif de détection (1) de la présence d'un objet (9) dans une zone de détection, caractérisé par le fait qu'il comprend une ligne de transmission (2), un générateur relié à une entrée de ladite ligne de transmission et apte à générer un signal d'entrée, et un récepteur relié à une sortie de ladite ligne de transmission et apte à mesurer un signal de sortie, ladite ligne de transmission étant apte à rayonner un signal rayonné (15, 16) dans ladite zone de détection quand le générateur génère ledit signal d'entrée, ledit dispositif de détection comprenant en outre des moyens d'analyse aptes à détecter la présence d'un objet dans ladite zone de détection en fonction dudit signal de sortie.

## Description

La présente invention se rapporte à un dispositif de détection de la présence d'un objet dans une zone surveillée, et en particulier à l'utilisation d'un tel dispositif pour détecter la chute d'un objet sur une voie de circulation.

Pour détecter la chute d'un objet sur une voie de circulation, par exemple dans une station de métro, il est connu d'utiliser une caméra vidéo placée au-dessus des voies. Cette solution n'est cependant pas totalement satisfaisante car elle nécessite des opérations d'installation et d'entretien importantes et coûteuses, et ne fonctionne pas correctement en cas de masquage de l'angle de vue de la caméra.

Une autre solution connue est de disposer une pluralité de diodes électroluminescentes le long de la voie de circulation, par exemple une diode tous les 25 cm. Les diodes émettent des faisceaux dont on peut détecter l'interruption. Cette solution nécessite un grand nombre de diodes et de détecteurs, ce qui implique également des opérations d'installation et d'entretien importantes et coûteuses.

L'invention a pour but de fournir un dispositif de détection de la présence d'un objet dans une zone de détection, qui ne présente pas au moins certains des inconvénients précités de l'art antérieur.

Pour cela, l'invention fournit un dispositif de détection de la présence d'un objet dans une zone de détection, caractérisé par le fait qu'il comprend une ligne de transmission, un générateur relié à une entrée de ladite ligne de transmission et apte à générer un signal d'entrée, et un récepteur relié à une sortie de ladite ligne de transmission et apte à mesurer un signal de sortie, ladite ligne de transmission étant apte à rayonner un signal rayonné dans ladite zone de détection quand le générateur génère ledit signal d'entrée de sorte que, si un objet est présent dans la zone de détection, le signal de sortie comprend une première composante due à la propagation du signal d'entrée le long de la ligne de transmission et une deuxième composante due à un phénomène d'interaction entre le signal rayonné et l'objet, ledit dispositif de détection comprenant en outre des moyens d'analyse aptes à constater la présence ou l'absence de ladite deuxième composante dans ledit signal de sortie afin de détecter la présence d'un objet dans ladite zone de détection. De préférence, la détection de l'objet est réalisée en vue de son identification.

La ligne de détection constitue un élément robuste qui nécessite très peu d'entretien et est facile à installer.

De préférence, lesdits moyens d'analyse sont aptes à comparer ledit signal de sortie avec un signal de référence prédéterminé afin de détecter la présence d'un objet.

Avantageusement, ledit signal de référence correspond à un signal de sortie qui a été mesuré en l'absence d'objet dans ladite zone de détection, appelé signal de calibrage.

Ainsi, une simple opération de différenciation entre le signal de sortie et le signal de référence permet de constater la présence de la deuxième composante due au phénomène d'interaction entre le signal rayonné et un objet.

Selon un mode de réalisation particulier, lesdits moyens d'analyse comprennent des moyens d'identification aptes à détecter des caractéristiques d'un objet présent dans ladite zone de détection et à comparer lesdites caractéristiques avec des caractéristiques de référence afin d'identifier ledit objet.

De préférence, ledit signal d'entrée comprend une impulsion à ultra large bande de fréquences.

Un tel signal d'entrée présente plusieurs avantages. La première composante du signal de sortie, due à la propagation de l'impulsion le long de la ligne de transmission, et la deuxième composante du signal de sortie, due à un phénomène d'interaction (par exemple la réflexion) entre l'impulsion et l'objet sont décalées dans le domaine du temps, même en cas de faible distance entre la ligne de transmission et l'objet. Cela permet de facilement les distinguer. La première composante peut donc servir de point de départ à une fenêtre de temps de mesure, qui définit la portée du dispositif de détection. De plus, le signal rayonné occupe une grande largeur de bande et comme la puissance moyenne émise est limitée, la densité spectrale est extrêmement faible. Ainsi, on évite de perturber d'autres systèmes avoisinants ou d'être perturbé par des systèmes à bande étroite. De plus, cette largeur de bande de fréquence importante fournit la réponse globale de l'objet à détecter dans toute cette bande de fréquence, facilitant ensuite son identification.

Selon un mode de réalisation particulier, la ligne de transmission comprend au moins un conducteur et un plan de référence. Par exemple, ladite ligne de transmission comprend une couche de matériau diélectrique, une couche métallique qui recouvre un côté de ladite couche de matériau diélectrique et une bande métallique du côté opposé de ladite couche de matériau diélectrique. Par exemple, il peut s'agir d'une ligne micro-ruban, strip-line ou coplanaire.

Avantageusement, ladite couche de matériau diélectrique, ladite couche métallique et ladite bande métallique forment une bande souple.

Une telle bande souple est particulièrement facile à installer. Par exemple, elle peut être stockée sous forme de rouleau puis déroulée et fixée le long de la zone de détection.

L'invention fournit également une utilisation d'un dispositif de détection selon l'invention ci-dessus, pour détecter une chute sur une voie de circulation.

L'invention fournit également un procédé de détection de la présence d'un objet dans une zone de détection, caractérisé par le fait qu'il comprend les étapes consistant à :
- générer un signal d'entrée à une entrée d'une ligne de transmission,
- mesurer un signal de sortie à une sortie de ladite ligne de transmission, ladite ligne de transmission étant apte à rayonner un signal rayonné dans ladite zone de détection de sorte que, si un objet est présent dans la zone de détection, le signal de sortie comprend une première composante due à la propagation du signal d'entrée le long de la ligne de transmission et une deuxième composante due à un phénomène d'interaction entre le signal rayonné et l'objet,
- constater la présence ou l'absence de ladite deuxième composante dans ledit signal de sortie afin de détecter la présence d'un objet dans ladite zone de détection.

De préférence, le procédé comprend le fait d'analyser ledit signal de sortie pour détecter des caractéristiques d'un objet présent dans ladite zone de détection, et comparer lesdites caractéristiques avec des caractéristiques de référence afin d'identifier ledit objet.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective d'un dispositif de détection selon un mode de réalisation de l'invention,
- la figure 2 est une vue similaire à la figure 1, sur laquelle on a représenté un objet à détecter,
- la figure 3 est une vue en perspective d'une station de métro dans laquelle est installé le dispositif de la figure 1, et
- la figure 4 est un diagramme dans le domaine des temps représentant un exemple de signal de sortie du dispositif de la figure 1.

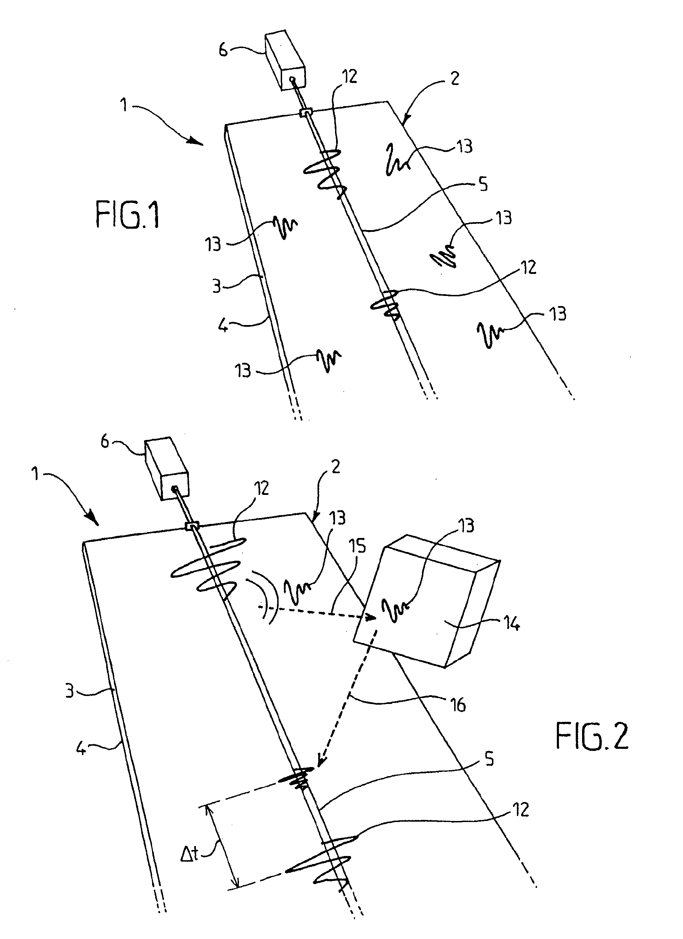

En référence aux figures 1 et 2, le dispositif de détection 1 comprend une ligne de transmission 2. Dans l'exemple représenté, la ligne de transmission 2 comprend une couche en matériau diélectrique 3 de forme sensiblement rectangulaire, une couche métallique 4 qui recouvre une face de la couche en matériau diélectrique 3, et une bande métallique 5 qui s'étend sur la face opposée de la couche en matériau diélectrique 3, sensiblement parallèlement aux deux longs bords de la couche en matériau diélectrique 3, au milieu de ceux-ci. Ces éléments forment ensemble une bande souple.

Un générateur 6 est relié à une extrémité d'entrée de la ligne de transmission 2, et est apte à générer un signal d'entrée à l'extrémité d'entrée de la ligne de transmission 2. Un récepteur (non représenté) est relié à une extrémité de sortie de la ligne de transmission 2, et est apte à mesurer un signal de sortie à l'extrémité de sortie de la ligne de transmission 2.

Le dispositif de détection 1 a pour fonction de détecter la présence d'un objet 14 dans une zone de détection adjacente à la ligne de transmission 2. A cet effet, le dispositif de détection 1 comprend également des moyens d'analyse (non représentés) reliés au récepteur et aptes à analyser le signal de sortie pour détecter la présence d'un objet. Les moyens d'analyse comprennent par exemple un microprocesseur ou un dispositif comprenant un FPGA, sur lequel s'exécute un programme approprié. Le microprocesseur peut être adjacent au récepteur, par exemple il peut être agencé dans le même boîtier. Alternativement, le microprocesseur peut être situé à distance du récepteur, qui lui transmet le signal de sortie mesuré par un réseau de télécommunication.

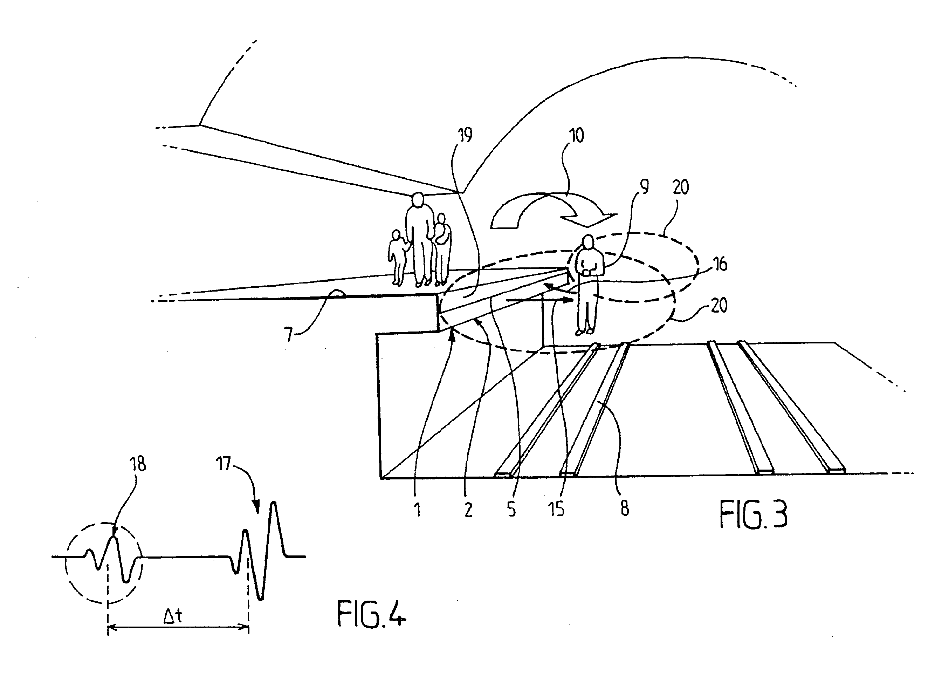

La figure 3 représente le dispositif de détection 1 agencé dans une station de métro. La ligne de transmission 2 est agencée sur le bord 19 du quai 7, sur toute sa longueur. Le dispositif de détection 1 permet de détecter la présente d'un objet, par exemple d'une personne 9, dans une zone de détection indiquée par les courbes 20. Ainsi, si une personne tombe du quai 7 sur une voie de circulation 8, comme le représente la flèche 10, il sera possible de prendre les mesures appropriées pour éviter ou limiter les risques d'accident.

Le fonctionnement du dispositif de détection 1 est le suivant. De manière périodique, le générateur 6 génère un signal d'entrée sous la forme d'une impulsion à ultra large bande de fréquences, c'est-à-dire une impulsion d'une durée de l'ordre de 1 ns ou moins.

Cette impulsion est propagée le long de la ligne de transmission 2, comme le représentent les impulsions propagées 12 sur les figures 1 et 2. D'autre part, au cours de cette propagation, deux phénomènes ont lieu. Premièrement, de l'énergie est dissipée par effet Joule. En raison de l'énergie dissipée, les impulsions propagées 12 sont atténuées, par exemple de l'ordre de 1dB/10m à 3 GHz. Deuxièmement, de l'énergie est rayonnée, c'est-à-dire émise sous la forme d'onde électromagnétique, le long de la ligne, comme le représentent les impulsions rayonnées 13.

Si un objet 14, par exemple une personne 9, est présent dans la zone de détection, l'énergie rayonnée est réfléchie par l'objet 14, notamment vers la ligne de transmission 2, comme le représentent les flèches 15 et 16 sur les figures 2 et 3.

Dans ce cas, le signal de sortie comprend deux composantes, comme le montre la figure 4. Une première composante 17 est due à la propagation de l'impulsion sur la ligne de transmission 2, c'est-à-dire directement de l'extrémité d'entrée à l'extrémité de sortie. Une deuxième composante 18 est due à un phénomène d'interférence de l'impulsion rayonnée sur l'objet 14, qui est décalée temporellement d'une valeur Δt, en raison du temps de propagation selon les flèches 15 et 16. Le phénomène d'interférence en question peut être la réflexion sur les parois conductrices ou diélectriques de l'objet. La diffraction, notamment sur les arêtes de l'objet, peut aussi apporter une contribution significative, selon le type d'objet. Souvent aux plus hautes fréquences, en gamme millimétrique, un troisième phénomène appelé diffusion de l'onde électromagnétique sur l'objet peut également apparaître. La contribution de ces différents phénomènes physiques est une relation complexe faisant intervenir la fréquence, les caractéristiques conductrices et diélectriques de l'objet à détecter...Dans une bande de fréquences centimétriques, c'est-à-dire de 3 à 10 GHz, ce sont principalement les phénomènes de réflexion et de diffraction qui contribuent à la deuxième composante 18.Même pour une faible distance entre l'objet 14 et la ligne de transmission 2, le décalage Δt sera généralement supérieur à quelque ns, par exemple de l'ordre de 8 ns pour une distance de 1,2 m. L'impulsion générée par le générateur 6 est une impulsion ultra large bande qui n'est que peu déformée au cours de la propagation sur la ligne de transmission 2 qui présente une grande bande passante. Ainsi, la première composante 17 du signal de sortie est aussi une impulsion à ultra large bande d'une durée de l'ordre de 1 ns ou moins. Les deux composantes du signal de sortie peuvent donc être facilement distinguées.

Cela permet de limiter la taille de la zone de détection en imposant que le décalage Δt soit inférieur à un seuil donné. Par exemple, dans le cas d'une ligne de transmission 2 agencée le long d'un quai 7, comme représenté sur la figure 3, on peut limiter la taille de la zone de détection pour détecter les chutes sur la voie de circulation 8 adjacente au quai 7, et pas sur la deuxième voie adjacente au quai opposé, pour laquelle un autre dispositif de détection peut être prévu. Alternativement ou en complément, les générateurs de deux dispositifs de détection agencés sur deux quais opposés peuvent générer des impulsions de formes différentes pour éviter qu'un des dispositifs perturbe le fonctionnement de l'autre et inversement.

En déterminant la différence entre le signal de sortie mesuré et un signal de référence prédéterminé, qui est un signal de sortie mesuré en l'absence d'objet dans la zone de détection, on obtient un signal correspondant sensiblement à la deuxième composante 18 du signal de sortie. Dans un mode de réalisation particulièrement simple, on considère qu'un objet est présent dans la zone de détection si ce signal présente une amplitude supérieure à un seuil donné.

Dans un autre mode de réalisation plus élaboré, on effectue un traitement afin d'identifier des caractéristiques de l'objet 14 présent dans la zone de détection. Par exemple, on utilise la méthode de Prony, décrite dans IEEE AP, Vol 40, Issue 1, High resolution radar target modeling using a modified Prony estimator*,* pour décomposer la deuxième composante 18 en n sinusoïdes amorties et déterminer n pôles caractéristiques de l'objet 14. En comparant les n pôles caractéristiques déterminés avec des informations contenues dans une bibliothèque de cibles connues, on peut identifier et classer l'objet 14. Cela permet notamment, en cas de chute d'un objet sur une voie de circulation 8, de prendre des mesures appropriées en fonction de l'objet 14.

Etant donné que le générateur 6 génère un signal d'entrée sous la forme d'une impulsion à ultra large bande de fréquences, l'énergie émise sous la forme d'onde électromagnétique par la ligne de transmission et représentée par les impulsions rayonnées 13 présente un contenu spectral très élevé. De ce fait, l'objet 14 répond globalement à l'ensemble de ces fréquences/sollicitations, selon les phénomènes de réflexion et de diffraction caractéristiques de sa géométrie et de sa structure. Il fournit dès lors en retour ce qu'on peut appeler une « réponse globale » caractéristique de cet objet dans toute cette gamme de fréquences. Grâce à la richesse de l'information récoltée, cette réponse globale, que ne fournirait pas un radar à bande étroite, permet ensuite d'identifier plus facilement l'objet détecté.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de détection (1) de la présence d'un objet (14, 9) dans une zone de détection pour détecter la chute d'un objet sur une voie de circulation notamment dans une station de métro, comprenant une ligne de transmission (2), un générateur (6) relié à une entrée de ladite ligne de transmission et apte à générer un signal d'entrée, et un récepteur relié à une sortie de ladite ligne de transmission et apte à mesurer un signal de sortie, ladite ligne de transmission étant apte à rayonner un signal rayonné (13, 15, 16) dans ladite zone de détection quand le générateur génère ledit signal d'entrée de sorte que, si un objet est présent dans la zone de détection, le signal de sortie comprenant une première composante (17) due à la propagation du signal d'entrée le long de la ligne de transmission et une deuxième composante (18) due à un phénomène d'interaction entre le signal rayonné et l'objet, ledit dispositif de détection comprenant en outre des moyens d'analyse aptes à constater la présence ou l'absence de ladite deuxième composante dans ledit signal de sortie afin de détecter la présence d'un objet dans ladite zone de détection, et aptes à comparer ledit signal de sortie avec un signal de référence prédéterminé afin de détecter la présence d'un objet,
**caractérisé par le fait que** ledit signal de référence correspond à un signal de sortie qui a été mesuré en l'absence d'objet dans ladite zone de détection et en ce que la ligne de transmission est apte à être agencée sur un bord du quai de métro sur toute la longueur du quai.

2. Dispositif selon la revendication 1, **caractérisé par le fait que** lesdits moyens d'analyse comprennent des moyens d'identification aptes à détecter des caractéristiques d'un objet présent dans ladite zone de détection et à comparer lesdites caractéristiques avec des caractéristiques de référence afin d'identifier ledit objet.

3. Dispositif selon l'une des revendications 1 à 2, **caractérisé par le fait que** ledit signal d'entrée comprend une impulsion à ultra large bande de fréquences.

4. Dispositif selon l'une des revendications 1 à 3, **caractérisé par le fait que** ladite ligne de transmission comprend une couche de matériau diélectrique (3), une couche métallique (4) qui recouvre un côté de ladite couche de matériau diélectrique et une bande métallique (5) du côté opposé de ladite couche de matériau diélectrique.

5. Dispositif selon la revendication 4, **caractérisé par le fait que** ladite couche de matériau diélectrique, ladite couche métallique et ladite bande métallique forment une bande souple.

6. Utilisation d'un dispositif de détection selon l'une des revendications 1 à 5 pour détecter une chute sur une voie de circulation (8).

7. Procédé de détection de la présence d'un objet (14, 9) dans une zone de détection, pour détecter la chute d'un objet sur une voie de circulation notamment dans une station de métro, comprenant les étapes consistant à :
- générer un signal d'entrée à une entrée d'une ligne de transmission (2) apte à être agencée sur un bord du quai de métro sur toute sa longueur,
- mesurer un signal de sortie à une sortie de ladite ligne de transmission, ladite ligne de transmission étant apte à rayonner un signal rayonné (13, 15, 16) dans ladite zone de détection de sorte que, si un objet est présent dans la zone de détection, le signal de sortie comprend une première composante (17) due à la propagation du signal d'entrée le long de la ligne de transmission et une deuxième composante (18) due à un phénomène d'interaction entre le signal rayonné et l'objet,
- constater la présence ou l'absence de ladite deuxième composante dans ledit signal de sortie afin de détecter la présence d'un objet dans ladite zone de détection, **caractérisé en ce qu'**il comprend l'étape consistant à :
- comparer ledit signal de sortie avec un signal de référence prédéterminé afin de détecter la présence d'un objet, ledit signal de référence correspondant à un signal de sortie qui a été mesuré en l'absence d'objet dans ladite zone de détection.

8. Procédé selon la revendication 7, comprenant le fait d'analyser ledit signal de sortie pour détecter des caractéristiques d'un objet présent dans ladite zone de détection, et comparer lesdites caractéristiques avec des caractéristiques de référence afin d'identifier ledit objet.

9. Quai d'une station de métro comprenant un bord en regard d'une voie de circulation et un dispositif de détection selon l'une quelconque des revendications 1 à 5 dont la ligne de transmission (2) est agencée sur toute la longueur le long du bord de quai.
